# EUROPEAN PATENT APPLICATION

(11) **EP 2 490 116 A1**
(43) Date of publication of application: **22.08.2012**
(21) Application number: 12155958.7
(22) Date of filing: 17.02.2012
(51) Int. Cl.: G06F 3/048, H04M 1/67, H04M 1/725

(54) **Method for providing background of locked screen, electronic device and computer program product using the same**

(30) Priority: 17.02.2011 US 201161444087 P
(71) Applicant: HTC Corporation, Taoyuan County 330 (TW)
(72) Inventor: Brinda, David, Washington, 98005 (US); Bamford, Drew, Washington, 98005 (US); Cielak, Matthew Joseph, Washington, 98005 (US)
(74) Representative: 2K Patentanwälte Blasberg Kewitz & Reichel

(57) **Abstract**

A method for providing a background of a locked screen, an electronic device and a computer program product using the method are provided. The method for providing the background of the locked screen includes the following steps. A selection of a background setting style is received (S201). When the electronic device enters a screen lock state, one or more display data are obtained from a storage device according to the selected background setting style (S205). A background of the electronic device in the screen lock state is generated by using a template corresponding to the selected background setting style and the display data (S211), and the display data on the screen lock background changes as time changes (S215). Accordingly, the purpose of providing a variety of screen lock backgrounds for user selection is achieved.

## Description

### BACKGROUND OF THE INVENTION

### FIELD OF THE INVENTION

The invention relates to a method for providing a background, an electronic device and a computer program product using the same. Particularly, the invention relates to a method for providing a screen lock background, an electronic device and a computer program product using the same.

### DESCRIPTION OF RELATED ART

With development of technology, in a current information society, people increasingly depend on electronic products. To cope with a demand of high working frequency, high efficiency, and features of lightness, slimness, shortness and smallness of the electronic products, utilization of various portable electronic devices such as notebook personal computers (PC), mobile phones, personal digital assistants (PDA), smart phones, pocket PC and tablet PC, etc. becomes popular. However, regarding the portable mobile device requiring features of lightness, slimness, shortness and smallness, a size thereof is strictly limited, so that a touch screen technique is developed to integrate a keyboard with a screen to serve as an input interface of the portable electronic device, so as to save cost of a conventional keyboard and an area occupied by the conventional keyboard.

Although it is quite convenient to operate the electronic device through the touch screen, a user may inadvertently touch a screen key displayed on the touch screen to execute a specific function, for example, a call function of the electronic device by accident. Therefore, the mobile device has a screen lock mode to prevent the user from miss-touching the touch screen to activate an unnecessary function. In other words, when the user does not need to operate the electronic device, the user can manually set the electronic device to a screen lock state, so as to lock an input function of the touch screen. Alternatively, when a non-operation time of the electronic device reaches a predetermined value, the screen lock state is automatically activated to prevent the situation of miss-touching.

Generally, a background presented by the electronic device in the screen lock state is a single picture file, and even the user selects a different picture file according to his preference, it still looks dull to only use the picture as a background frame, and a usage fun is not effectively improved.

### SUMMARY OF THE INVENTION

The invention is directed to a method for providing a background of a locked screen, an electronic device and a computer program product using the same, in which when the electronic device enters a screen lock state, a background with different patterns of information type and presenting manner is displayed according to different background setting styles.

The invention provides a method for providing a background of a locked screen, which is adapted to an electronic device. The method for providing the background of the locked screen includes the following steps. A selection of a background setting style is received. When the electronic device enters a screen lock state, one or more display data are obtained from a storage device according to the background setting style. A background of the electronic device in the screen lock state is generated by using a template corresponding to the background setting style and the display data, and the display data on the background changes as time changes.

The invention providers an electronic device including a screen, a memory, one or more processing unit and one or more program. The program is stored in the memory, and the processing unit executes one or more instructions of the program, where the instructions includes following steps. A selection of a background setting style is provided. When the electronic device enters a screen lock state, one or more display data are obtained from a storage device according to the background setting style. A background displayed on the screen of the electronic device in the screen lock state is generated by using a template corresponding to the background setting style and the display data. The display data on the background changes as time changes.

The invention provides a computer program product, which includes a computer readable storage medium. The computer readable storage medium records one or more instructions. After the instructions is loaded to an electronic device, following steps are executed. A selection of a background setting style is received. When the electronic device enters a screen lock state, one or more display data are obtained from a storage device according to the background setting style. A background of the electronic device in the screen lock state is generated by using a template corresponding to the background setting style and the display data. The display data on the background changes as time changes.

According to the above descriptions, when the electronic device is in the screen lock state, according to different background setting styles, the relative display data of a specific type are obtained to generate a corresponding special background, and the display data of the background changes as time changes. In this way, when the electronic device is in the screen lock state, a specific type of display data may be provided to the user through the special background corresponding to the background setting style, so as to match the user's demand.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a block diagram of an electronic device according to an embodiment of the invention.

FIG. 2 is a flowchart illustrating a method for providing a background of a locked screen according to an embodiment of the invention.

FIG. 3A is a schematic diagram of a background corresponding to a background setting style of application shortcut according to an embodiment of the invention.

FIG. 3B is a schematic diagram of a background corresponding to a background setting style of application shortcut according to another embodiment of the invention.

FIG. 3C is a schematic diagram of a background corresponding to no background setting style is being selected according to an embodiment of the invention.

FIG. 4A is a schematic diagram of a background corresponding to a background setting style of contacts according to an embodiment of the invention.

FIG. 4B is a schematic diagram of a background corresponding to a background setting style of contacts according to an embodiment of the invention.

FIG. 4C is a schematic diagram of a background corresponding to a background setting style of social network service according to an embodiment of the invention.

FIG. 4D is a schematic diagram of a background corresponding to a background setting style of social network service according to an embodiment of the invention.

FIG. 5A is a schematic diagram of a background corresponding to a background setting style of gallery according to an embodiment of the invention.

FIG. 5B is a schematic diagram of a background corresponding to a background setting style of gallery according to an embodiment of the invention.

FIG. 5C is a schematic diagram of a background corresponding to a background setting style of gallery according to an embodiment of the invention.

FIG. 5D is a schematic diagram of a background corresponding to a background setting style of gallery according to an embodiment of the invention.

FIG. 6A is a schematic diagram of a background corresponding to a background setting style of weather information according to an embodiment of the invention.

FIG. 6B is a schematic diagram of a background corresponding to a background setting style of weather information according to an embodiment of the invention.

FIG. 7A is a schematic diagram of a background corresponding to a background setting style of stock information according to an embodiment of the invention.

FIG. 7B is a schematic diagram of a background corresponding to a background setting style of stock information according to an embodiment of the invention.

FIG. 8 is a schematic diagram of a background corresponding to a background setting style of virtual clock according to an embodiment of the invention.

### DETAILED DESCRIPTION OF DISCLOSED EMBODIMENTS

Along with the increasing variety of supported functions of an electronic device, when the electronic device is in a screen lock state, if data displayed on a screen background presents a user's preference or a commonly used function of the electronic device, usage convenience of the electronic device may be improved. The invention provides a method for providing a background of a locked screen, an electronic device and a computer program product using the same according to the above point of view. In order to fully convey the spirit of the invention, embodiments are provided below for descriptions.

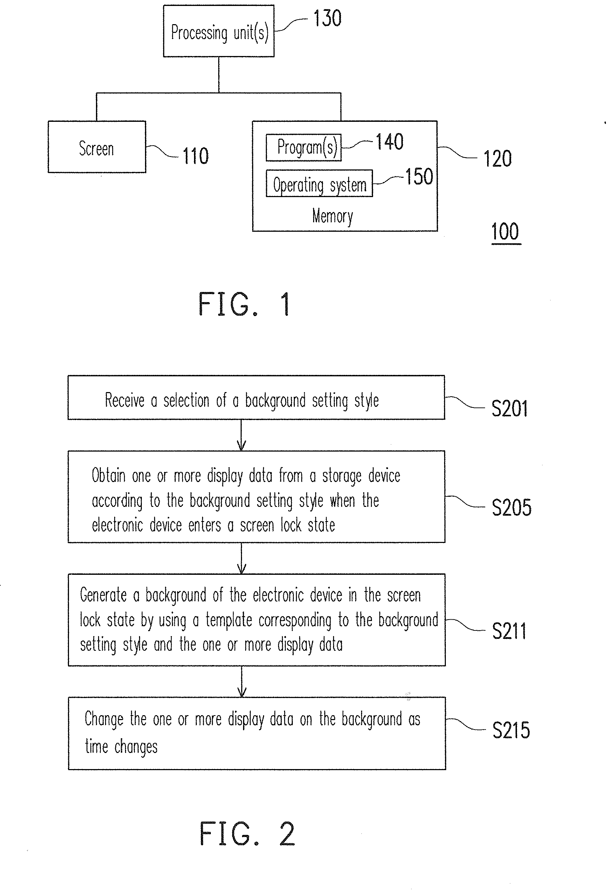

FIG. 1 is a block diagram of an electronic device according to an embodiment of the invention. The electronic device 100 of the present embodiment includes a screen 110, a memory 120 and one or more processing units 130, where the one or more processing units 130 are coupled to the screen 110 and the memory 120. The electronic device 100 is, for example, a mobile phone, a smart phone, a personal digital assistant (PDA), a laptop computer, a tablet panel computer (PC), a digital camera, an electronic book or a game machine, etc., which is not limited by the invention.

In an embodiment, the screen 110 may be any type of a touch screen, for example, a resistive touch screen, a capacitive touch screen, an optical touch screen, an acoustic wave touch screen, an electromagnetic touch screen, etc., though the invention is not limited thereto. The screen 110 having a touch control function can serve as an input/output interface of the electronic device 100. Namely, the screen 110 may be used to receive a touch input from the user, and may be used to display information of the electronic device 100. The information may be operation interfaces of various application programs, widgets, services or functions and generated information contents. In another embodiment, the screen 110 can also be a liquid crystal display (LCD) that only has the display function, and the user has to perform input through an input device such as a hardware button or a keyboard, etc.

The memory 120 may be an internal storage unit or an external storage unit. The internal storage unit may be a random access memory (RAM), a read-only memory (ROM), a flash memory, or a magnetic disk storage device, etc. The external storage unit may be a compact flash (CF) memory card, a secure digital (SD) memory card, a micro SD memory card, or a memory stick (MS), etc., and the external storage unit is connected to the electronic device 100 through a corresponding interface. Moreover, the memory 120 can also be a network storage space, and the electronic device 100 may connect and access the network storage space through a network by using a network device (not shown).

In the present embodiment, the memory 120 stores one or more programs 140 and an operating system 150. Moreover, the memory 120 may also store various application programs (not shown) and widgets (not shown) that can be executed on the electronic device 100, and software components (not shown) required in operation.

The one or more programs 140 include one or more instructions. Further, the one or more processing units 130 execute the instructions included in the one or more programs 140 to implement a method for providing a background of a locked screen of the present embodiment, so as to generate the background displayed on the screen 110 when the electronic device 100 is in the screen lock state. Each of the one or more processing units 130 may be a central processing unit (CPU), a programmable microprocessor, a digital signal processor (DSP), a programmable controller, an application specific integrated circuit (ASIC), a programmable logic device (PLD) or other similar devices. In this way, when the electronic device 100 is activated, the one or more processing units 130 can execute the one or more programs 140 stored in the memory 120 and/or other software installed in the electronic device 100.

Various steps of the method for providing a background of a locked screen of the present embodiment are described below with reference of the electronic device 100. FIG. 2 is a flowchart illustrating a method for providing a background of a locked screen according to an embodiment of the invention. It should be noticed that the electronic device 100 of the present embodiment has the screen lock state and a screen unlock state. It is assumed that the screen 110 serves as an input interface (for example, a touch screen) of the electronic device 100. When the electronic device 100 is in the screen lock state, the electronic device still continually operates, and when the user touches the screen 110, the electronic device 100 ignores most of touch signals generated by the user input. Namely, the electronic device 100 can only receive predetermined touch signals including a predetermined touch signal used for switching the screen lock state/the screen unlock state, and a predetermined touch signal used for switching display data on the background displayed on the screen 110. On the other hand, when the electronic device 100 is in the screen unlock state, the user can normally operate the electronic device 100. Namely, functions and services supported by the electronic device 100 and application programs and widgets installed in the electronic device 100 can all be called and used. Further, the electronic device 100 in the screen unlock state can receive a signal input through the screen 110 and generate a corresponding operation result. Signals input through other input devices can also be processed by the electronic device 100 in the screen unlock state.

Referring to FIG. 1 and FIG. 2, in step S201, a selection of a background setting style is received. In the present embodiment, the electronic device 100 has a plurality of background setting styles for selection, where each of the background setting styles corresponds to a widget, an application program, a function or a service provided by the electronic device 100. For example, the background setting styles may include an application shortcut style, a contacts style, a social network service style, a gallery style, weather information style, stock information style or a virtual clock style, etc., though the invention is not limited thereto. Namely, the electronic device 100 may also have other background setting styles for selection. In an embodiment, the user may select the background setting style when the electronic device 100 is in the screen unlock state. In another embodiment, the electronic device 100 may analyse a usage habit of the user to automatically select the background setting style.

After the specific background setting style is selected, in step S205, when the electronic device 100 enters the screen lock state, one or more display data are obtained from a storage device according to the currently selected background setting style. The storage device of the present embodiment may be a remote storage device or a local storage device. The remote storage device is, for example, an online storage, and the local storage device may be built in or externally connected to the electronic device 100, which is, for example, a built in hard disk, a portable memory device (e.g., a pen drive), or a memory card, etc. A type of the display data corresponds to the selected background setting style. For example, the display data corresponding to the application shortcut style include a picture file serving as a wallpaper and one or more application programs the shortcut icon will be displayed. The display data corresponding to the contacts style or social network service style include contacts information and/or dynamic information shared to a community website by friends. The display data corresponding to the gallery style include photos and images. The display data corresponding to the weather information style include a current temperature, a weather status, a rain rate, a future/past weather report, etc. The display data corresponding to the stock information style includes a stock market content, such as stock price, stock quote, market trend, a stock trend, futures, and a classification option price and Hong Kong Shanghai and Shenzhen stocks, etc. The display data corresponding to virtual clock style includes a minute, a second and a date of time. In such step, the one or more display data are, for example, obtained from a remote storage device corresponding to the background setting styles through a network, or the one or more display data are directly obtained from the local storage device.

Then, in step S211, a background of the electronic device 100 in the screen lock state is generated by using a template corresponding to the background setting style and the obtained display data. In step S215, the display data on the background changes as time changes. Namely, when the electronic device 100 is in the screen lock state, the background displayed on the screen 110 is no longer a pure picture file, but presents different types of display data according to the selection of the background setting style, and the various types of display data is presented according to the template corresponding to the background setting style, and a content and/or a presenting manner of the display data changes as time changes.

It should be noticed that the background generated according to the background setting style does not include information such as a signal strength, a remaining power, a name of a telecommunication practitioner, and a time/date, etc. that are constantly displayed on the electronic device 100 regardless whether the electronic device 100 is in the screen lock state or the screen unlock state. In other words, besides the aforementioned information that are constantly displayed on the electronic device 100, the user can obtain more diversified information through the background when the electronic device 100 is in the screen lock state. Different background setting styles are described in detail below.

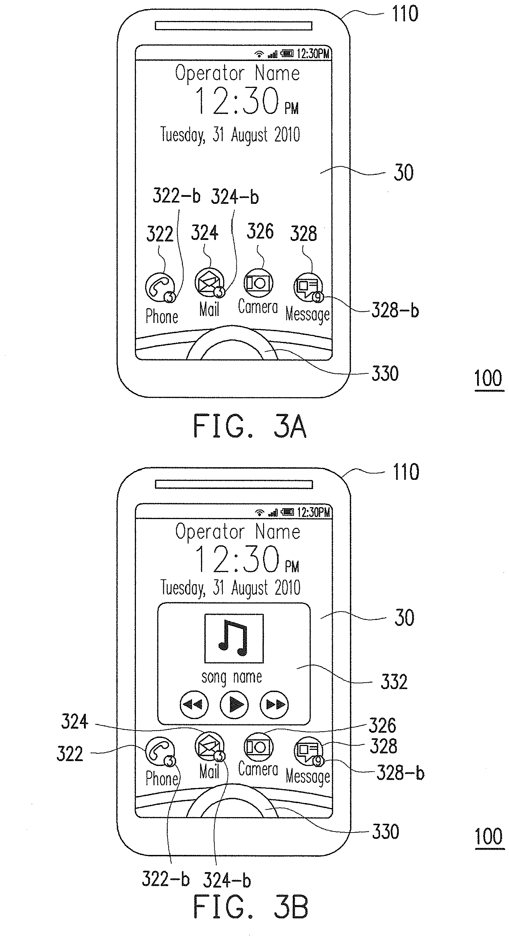

FIG. 3A is a schematic diagram of a background corresponding to a background setting style of application shortcut according to an embodiment of the invention. In the present embodiment, it is assumed that the user selects the application shortcut style as the background setting style. When the electronic device 100 enters the screen lock state, the obtained one or more display data include a picture file serving as the wallpaper and shortcut icons of application programs to be displayed (for example, obtained from the local storage device), and the background generated according to the template is shown as a background 30 of FIG. 3A. As shown in FIG. 3A, the background 30 includes shortcut icons 322, 324, 326 and 328 corresponding to the application programs of phone call, email, camera and message, etc., though the types of the application programs are not limited thereto. Further, the electronic device 100 may provide a plurality of predetermined application programs (for example, phone call, email, camera, message, file browser, web browser, multimedia player, calculator, calendar, and music, etc.), and the user can select at least one predetermined application program when the electronic device 100 is in the screen unlock state. As long as a selecting instruction generated by the aforementioned selection operation is received, and if the background setting style is the application shortcut style, when the electronic device 100 is in the screen lock state, the shortcut icon of the selected predetermined application program is then displayed on the background 30 to serve as a shortcut for activating the application program. In detail, the user can quickly activate an application program by operating a corresponding shortcut icon displayed on the background 30, and the electronic device 100 accordingly leaves the screen lock state.

For example, the user may drags the shortcut icon 322 corresponding to the phone call application program into the ring 330, so as to launch the phone call application program instantly. Alternatively, the user may drags the ring 330 onto the shortcut icon 324 corresponding to the email application program to launch the email application program instantly. Moreover, the user may drags the ring 330 and the shortcut icon 326 corresponding to the camera application program at the same time and makes the ring 330 and the shortcut icon 326 approach each other to immediately launch the camera application program.

Moreover, the one or more display data may further include a message that can be accessed or generated by the application program that the shortcut icon thereof should be displayed, and information related to the above message is displayed in form of a mark icon (for example, mark icons 322-b, 324-b and 328-b) together with the shortcut icon. Taking the shortcut icon 324 of the email as an example, the mark icon 324-b represents the number of unread emails in an inbox. In this way, when the electronic device 100 is in the screen lock state, the user can learn the number of unread emails according to the shortcut icon 324 and the mark icon 324-b displayed in the background 30.

In the present embodiment, although the four shortcut icons 322, 324, 326 and 328 are illustrated for corresponding to four selected predetermined application programs, the number and types of the predetermined application programs are not limited thereto, and when the electronic device 100 enters the screen lock state, as long as the background displayed on the screen 110 includes a shortcut icon of one or more predetermined application program, it is considered to be within the scope of the invention.

In another embodiment, the obtained one or more display data further include a lockscreen widget corresponding to an application program executed on the electronic device 100. When the user drags the lockscreen widget into the ring displayed on the screen 110, the application program corresponding to the lockscreen widget is launched immediately. FIG. 3B is a schematic diagram of a background corresponding to a background setting style of application shortcut according to this embodiment of the invention. It is assumed that a music application is executed on the electronic device 100, and once the electronic device 100 enters the screen lock state, besides the shortcut icons 322, 324, 326 and 328, a lockscreen widget 332 corresponding to the music application is also displayed on the background 30. If the user drags lockscreen widget 332 into the ring 330, the corresponding music application is launched and a now playing screen (e.g., the latest view of the user interface of the music application) of the music application is displayed on the screen 110.

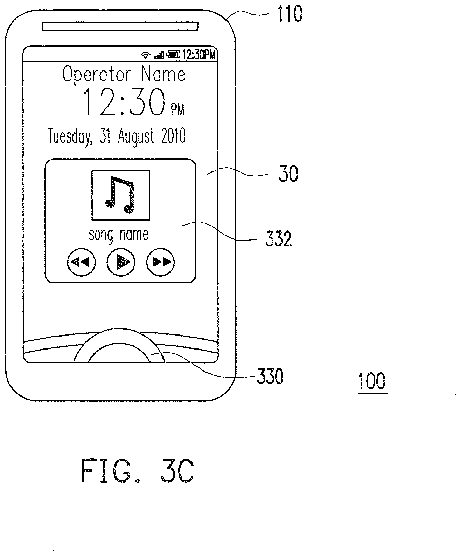

It should be noted that displaying a lockscreen widget on the background of the electronic device 100 in the screen lock state is not limited by the background setting style. That is, no matter what kind of background setting style is being selected (or no background setting style is being selected), as long as an application installed in the electronic device 100 is executed and the corresponding lockscreen widget is displayed on the background of the electronic device 100 in the screen lock state, so that the application can be launched by dragging the lockscreen widget into the ring displayed on the background, dragging the ring onto the lockscreen widget, or dragging both of the ring and the lockscreen widget to make them approach each other, it is considered to be within the scope of the invention. FIG. 3C is a schematic diagram of a background corresponding to no background setting style is being selected according to an embodiment of the invention. Referring to FIG. 3C, only a lockscreen widget 332 corresponding to an application (e.g., the music application) which is already executed on the electronic device 100 is displayed on the background 30. The application can be instantly launched in the same or similar way as described above.

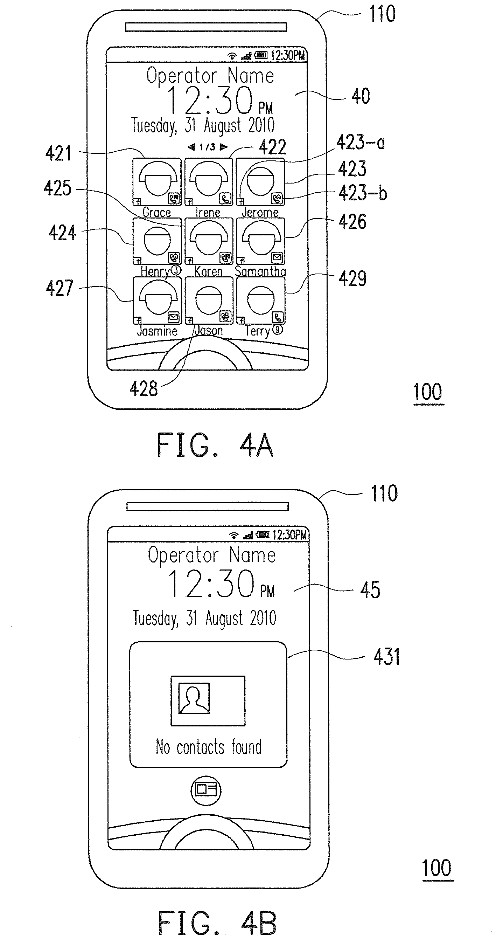

FIG. 4A is a schematic diagram of a background corresponding to a background setting style of contacts according to an embodiment of the invention. In case that the background setting style is set as the contacts style, the corresponding one or more display data include contacts information recorded in the local storage device of the electronic device 100, which may be names and/or profile photos of the contacts, and various contact manners (for example, phone numbers, email boxes, joined community websites, personal webpages, and instant messaging accounts, etc.). For example, when the electronic device 100 enters the screen lock state, contacts of a specific group are selected from all of the contacts, and the corresponding contact information is regarded as the display data to generate a background 40 displayed on the screen 110 when the electronic device 100 is in the screen lock state. In detail, the template corresponding to the contact displays one or a plurality of contact information belonging to a specific group in the background 40. As shown in FIG. 4A, profile photos 421-429 respectively represent 9 contacts belonging to a same specific group, and a tag at a lower left/right corner of each of the profile photos represents a contact manner. Taking the profile photo 423 as an example, this contact has two contact manners, where a tag 423-a represents that such contact uses a specific community website, and a tag 423-b represents that such contact has a phone number.

In the embodiment of FIG. 4A, the template limits the background 40 to simultaneously display 9 contacts, though the number the contacts is not limited thereto, and in other embodiments, along with different templates, an upper limit of the number of the contacts displayed in the generated background may be different. For example, the other template only displays 2, 4, or 5 contacts in the background. However, if the number of the contacts in the specific group exceeds the upper limit of the number of the contacts displayed in one page of the background that is specified by the template, a plurality of pages of the backgrounds may be generated, and the number of the contacts in each page of the background does not exceed the upper limit of the number of the contacts. Further, when the electronic device 100 receives an operation instruction from the user, the electronic device 100 switches an up/down page of the backgrounds to display different contact information.

Moreover, when the specific group selected by the user does not exist or the specific group does not include any contact, it represents that none contact information is obtained to serve as the display data. Now, the generated background is shown as a background 45 of FIG. 4B. In detail, the background 45 includes an error message 431 to notify the user the above situation.

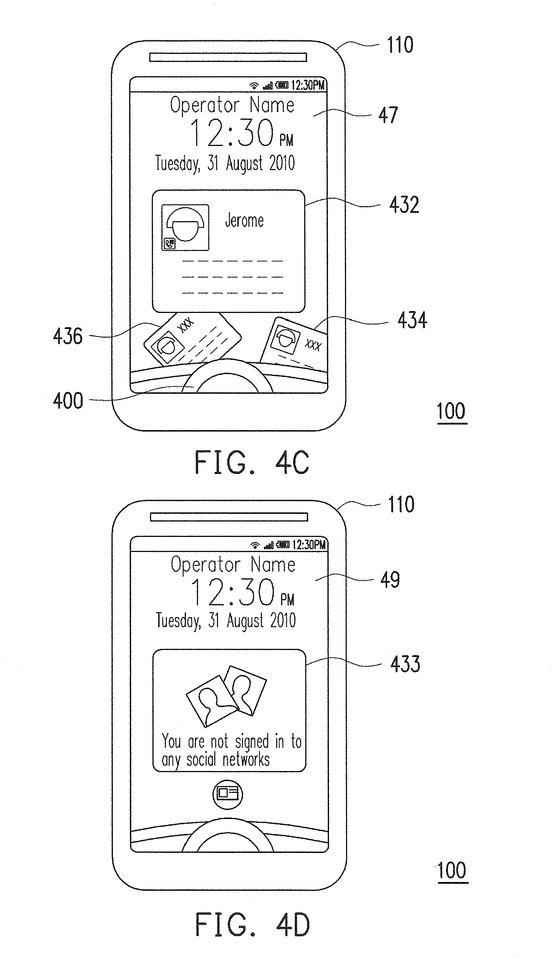

FIG. 4C is a schematic diagram of a background corresponding to a background setting style of social network service according to an embodiment of the invention. In the present embodiment, a remove storage device (for example, a server) that provides a community website or a network service is logged on through a network according to user identification (ID) information (for example, user account or password) recorded in the electronic device 100, and then the contacts information are obtained from the community website or the service webpage to serve as the display data, The obtained contacts information may be dynamic information (for example, photos, videos, texts, or links) shared to the community website or the service webpage by others. For example, shown as a background 47 of FIG. 4C, the background 47 includes three sets of contact information 432, 434 and 436, and each contact information includes a representative picture and name of the contact, and a message content shared to the community website. During the screen lock state, the electronic device 100 automatically accesses the remote storage device that provides the community website every a predetermined time, so as to obtain latest contact information to serve as the display data. Moreover, presenting manners such as display positions and sizes of all of the obtained contact information dynamically change as time changes, for example, the contact information 432, 434 and 436 are automatically and alternately enlarged and displayed at the center of the screen 110 clockwise. Besides, the electronic device 100 can also switch the contact information 432, 434 and 436 according to an operation instruction input by the user. In this way, even if the electronic device 100 is in the screen lock state, the user can still check different contact information by inputting the operation instructions. In other words, when the electronic device 100 is in the screen lock state, the user can still conveniently and opportunely view dynamic information on the community website through the background 47 displayed on the screen 110. Moreover, the user can drag any one of the contact information 432, 434 and 436 down into the ring 400 and unlock directly to the source Social app.

However, if the electronic device 100 does not record any user ID information, or the recorded user ID information cannot be used to logon the community website or the service webpage, the background displayed on the screen 110 of the electronic device 100 is shown as a background 48 of FIG. 4D, which includes an error message 433 to notify the user the above situation.

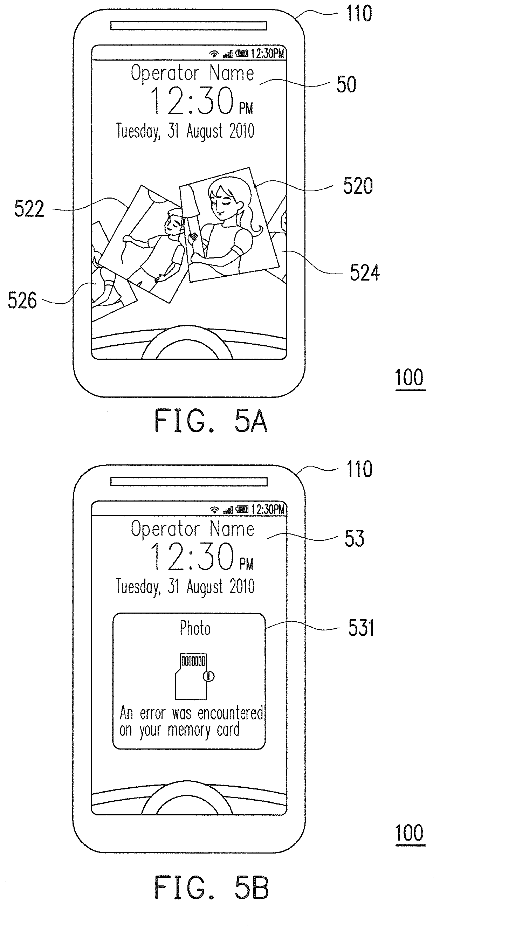

FIG. 5A is a schematic diagram of a background corresponding to a background setting style of gallery according to an embodiment of the invention. In the present embodiment, it is assumed that the user selects the gallery style as the background setting style. When the electronic device 100 enters the screen lock state, the obtained one or more display data may include photos in a specific photo album. The specific photo album may be selected by the user when the electronic device 100 is not in the screen lock state. The specific photo album may be a network photo album provided by a remote storage device (for example, a network storage space), and user ID information has to be used to log on the network photo album through a network, so as to obtain the photos stored therein. The specific photo album can also be a photo album in a local storage device (for example, a memory card) of the electronic device 100. As shown in FIG. 5A, in the screen lock state, a background 50 of the electronic device 100 is generated according to a template of the gallery style and photos 520, 522, 524 and 526, though the number of the photos are not limited thereto.

In detail, in the present embodiment, a presenting manner of the photos 520, 522, 524 and 526 serving as the display data change as time changes. For example, when the photos 520, 522, 524 and 526 are display in form of slide, each of the photos automatically moves towards a specific direction. In other words, the presenting manner such as a size, a display position or clarity of each of the photos changes as time changes. In another embodiment, a moving direction of each of the photos also changes as time changes, so that the photos are displayed in form of the slide in different moving directions. It should be noticed that the invention is not limited to the display effect of the slide, and in other embodiments, the obtained photos may have different display effects as time changes.

Moreover, the user can also switch the obtained photos during the screen lock state of the electronic device 100 by inputting an operation instruction. In this way, when the electronic device 100 is in the screen lock state, the background 50 may display different photos, and multiple display effects are presented during a switching process of the photos.

Moreover, when the electronic device 100 cannot obtain the photos from the storage device to serve as the display data, the background displayed in the screen 110 includes an error message to notify the user a reason why the photos cannot be obtained. For example, if the specific photo album selected by the user does not exist, or the specific photo album has no photo therein, the error message may include prompt message such as "No photos found, please select another photo album".

Further, as shown in FIG. 5B, it is assumed that the specific photo album is stored in the memory card (e.g., a SD card), and if the memory card is detected to be damaged when it is accessed, since the photos cannot be successfully obtained, an error message 531 in a background 53 is, for example, prompt message such as "An error was encountered on your memory card" to notify the user a reason of the error occurrence.

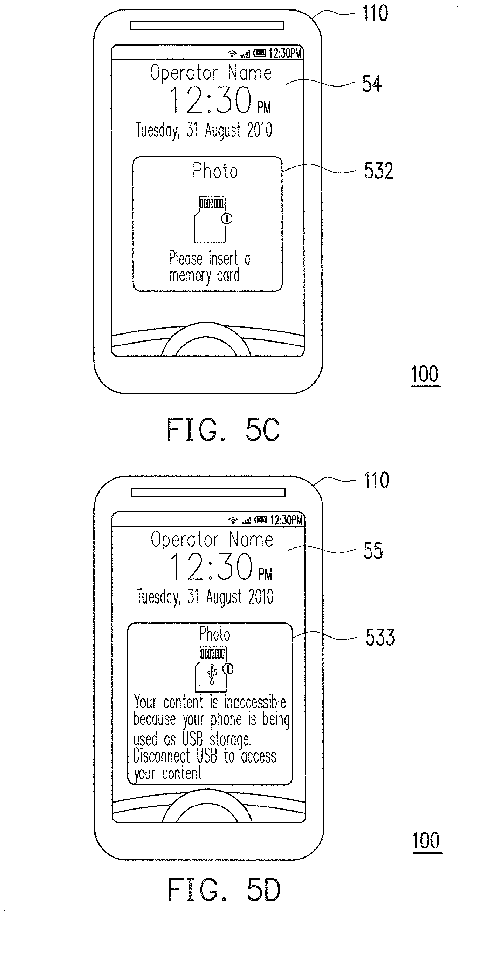

As shown in FIG. 5C, it is assumed that the specific photo album is stored in the memory card, and if the memory card cannot be detected when the photo stored therein are accessed, in order to inform the user to insert the memory card, an error message 532 in a background 54 is, for example, prompt message such as "Please insert a memory card".

In an embodiment, if the electronic device 100 has a universal serial bus (USB) interface, the user can connect the electronic device 100 to other devices through the USB interface for data accessing. Namely, the electronic device 100 may be used as a flash drive. When the electronic device 100 is in the screen lock state, if the electronic device 100 is connected to the other device through the USB interface, the photos cannot be obtained from the local storage device of the electronic device 100 for displaying. Now, the background is shown as a background 55 of FIG. 5D, in which an error message 533 is, for example, prompt message such as "Your content is inaccessible because your phone is being used as USB storage. Disconnect USB to access your content".

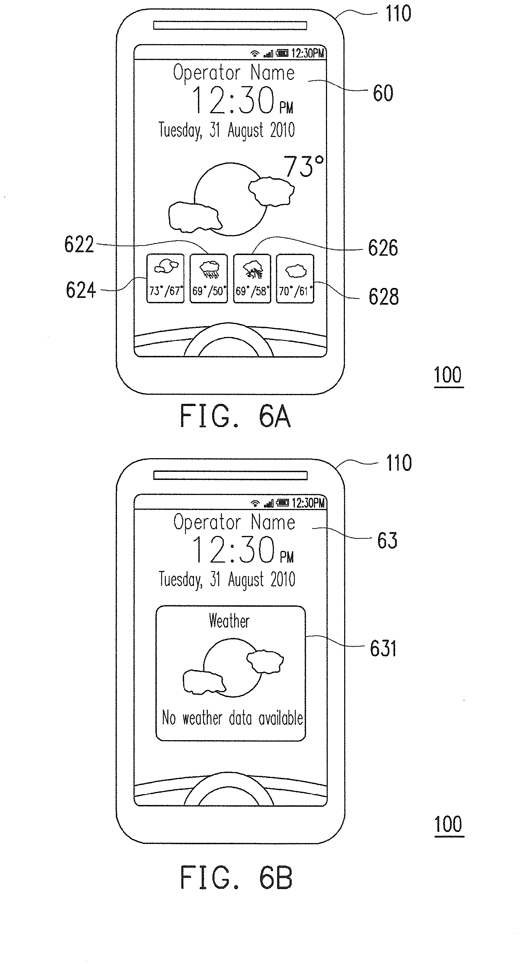

FIG. 6A is a schematic diagram of a background corresponding to a background setting style of weather information according to an embodiment of the invention. In the present embodiment, it is assumed that the user selects the weather information style as the background setting style. When the electronic device 100 enters the screen lock state, the obtained one or more display data may include a current temperature, a weather status, a rain rate, a past weather report, a future weather forecast, etc. The electronic device 100 may be connected to a weather report release center through the network to obtain a content of the latest weather information, and displays the obtained display data according to a template of the weather information. The electronic device 100 obtains the latest weather information to serve as the display data every a predetermined time, and opportunely displays the display data on a background 60. In the present embodiment, the template displays today's temperature and weather status in the center of the background 60, and displays the weather information of future several days (for example, four days, though the invention is not limited thereto) at a lower part of the background 60 by icons 622, 624, 626 and 628, though the template of the weather information is not limited thereto. In this way, even if the electronic device 100 enters the screen lock state, the user can still directly obtain the dynamic whether information through the background 60 of the electronic device 100 at any time.

However, as shown in FIG. 6B, when the electronic device 100 cannot obtain the content of the weather report from the weather report release center (for example, the electronic device 100 cannot obtain the content of the weather report through the network or according to a date or an area selected by the user), a background 63 displays an error message 631 to notify the user, where the error message 631 is, for example, prompt message such as "No weather data available".

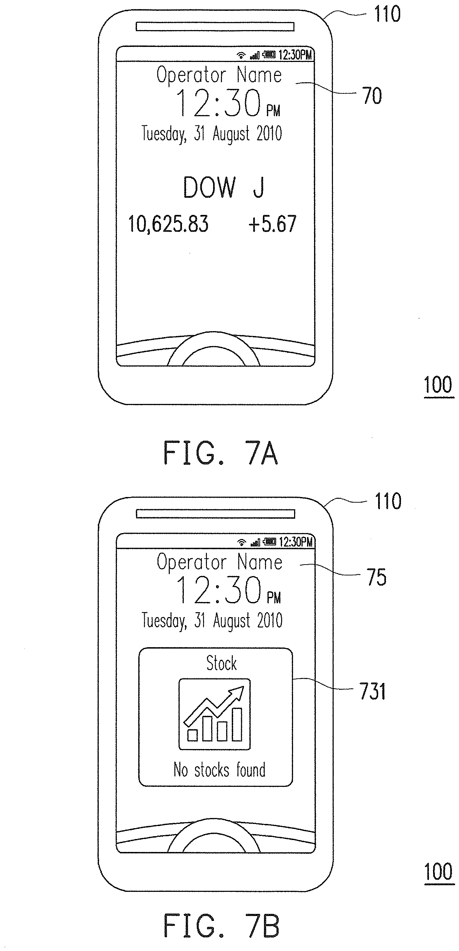

FIG. 7A is a schematic diagram of a background corresponding to a background setting style of stock information according to an embodiment of the invention. In the present embodiment, it is assumed that the user selects the stock information style as the background setting style. When the electronic device 100 enters the screen lock state, the obtained one or more display data may include stock names/codes pre-selected by the user and the corresponding stock prices, etc., and the background generated according to the template is shown as a background 70 of FIG. 7A. The electronic device 100 may be connected to a stock release center through the network to obtain a latest stock content, and displays the obtained display data according to a template of the stock information. In an embodiment, as the stock price goes up and down, the corresponding stock name moves towards different directions. For example, when the stock price goes up, the stock name moves upwards, and vice versa. The electronic device obtains the latest stock information every a predetermined time, and accordingly updates a content of a background 70. In this way, even if the electronic device 100 enters the screen lock state, the user can still directly obtain the dynamic stock information through the screen 110 of the electronic device 100 at any time.

However, when the electronic device 100 cannot obtain the latest stock information from the stock release center, the generated background is shown as a background 75 of FIG. 7B, and the background 75 displays an error message 731 of "No stocks found".

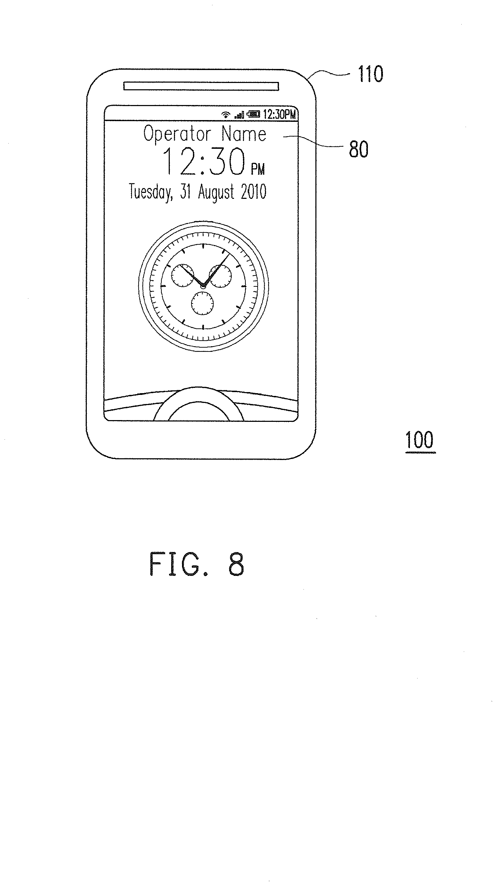

FIG. 8 is a schematic diagram of a background corresponding to a background setting style of virtual clock according to an embodiment of the invention. In the present embodiment, it is assumed that the user selects the virtual clock style as the background setting style. The obtained display data may include time, date and appearance setting of the virtual clock. The appearance setting of the virtual clock includes various different digital clocks and analog clocks, which may be selected by the user when the electronic device 100 is not in the screen lock state. The background generated according to the template is shown as a background 80 of FIG. 8. In the present embodiment, the template displays the virtual clock at the center of the background 80. It should be noticed that the background 80 may provide a three-dimensional (3D) display effect, and present a vivid 3D virtual clock along with movement of the electronic device 100.

The invention further provides a computer program product including a computer readable storage medium. The computer readable storage medium records a plurality of instructions. After the instructions are loaded into the electronic device for execution, the aforementioned method for providing a background of a locked screen is implemented, and the electronic device implements the functions described in the aforementioned embodiments. The computer readable storage medium may be a read-only memory, a random access memory, a magnetic tape, a floppy disk, a hard disk, an optical disk or a transmission medium, etc. In other embodiments, the computer program product can also be provided through network transmission, which is not limited by the invention.

In summary, the electronic device of the invention can obtain the display data corresponding to the selected background setting style from the remote storage device or the local storage device according to different background setting styles. When the electronic device is in the screen lock state, a specific type of display data may be obtained according to a different background setting style to generate a corresponding special background, and the display data of the background changes as time changes. In this way, based on the special background corresponding to the background setting style, when the electronic device is in the screen lock state, a specific type of display data is provided to the user, so as to match the user's demand.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A method for providing a background (30, 40, 45, 47, 49, 50, 53, 54, 55, 60, 63, 70, 75, 80) of a locked screen, adapted to an electronic device (100), and the method for providing the background (30, 40, 45, 47, 49, 50, 53, 54, 55, 60, 63, 70, 75, 80) of the locked screen comprising:
receiving (S201) a selection of a background setting style;
obtaining (S205) one or more display data from a storage device according to the background setting style when the electronic device (100) enters a screen lock state;
generating (S211) a background (30, 40, 45, 47, 49, 50, 53, 54, 55, 60, 63, 70, 75, 80) of the electronic device (100) in the screen lock state by using a template corresponding to the background setting style and the one or more display data; and
changing (S215) the one or more display data on the background (30, 40, 45, 47, 49, 50, 53, 54, 55, 60, 63, 70, 75, 80) as time changes.

2. The method as claimed in claim 1, further comprising:
providing a plurality of predetermined application programs;
receiving a selection instruction to select one of the predetermined application programs; and
displaying a shortcut icon (322, 324, 326, 328) corresponding to the selected predetermined application program on the background (30, 40, 45, 47, 49, 50, 53, 54, 55, 60, 63, 70, 75, 80).

3. The method as claimed in any one of claims 1 to 2, wherein the storage device is a remote storage device or a local storage device built in or externally connected to the electronic device (100),
when the storage device is the remote storage device, before the step of obtaining the one or more display data from the storage device according to the background setting style, the method further comprises connecting the remote storage device corresponding to the background setting style through a network, and the step of obtaining the one or more display data from the storage device according to the background setting style comprises obtaining the one or more display data from the remote storage device according to user identification information.

4. The method as claimed in any one of claims 1 to 3, wherein the step of changing the one or more display data on the background (30, 40, 45, 47, 49, 50, 53, 54, 55, 60, 63, 70, 75, 80) as time changes comprises:
changing a presenting manner of the one or more display data as time changes.

5. The method as claimed in any one of claims 1 to 4, wherein the step of changing the one or more display data on the background (30, 40, 45, 47, 49, 50, 53, 54, 55, 60, 63, 70, 75, 80) as time changes comprises:
accessing the storage device every a predetermined time so as to obtain latest display data according to the background setting style.

6. The method as claimed in any one of claims 1 to 5, wherein after the electronic device (100) enters the screen lock state, the method further comprises:
using an error message (431, 433, 531, 532, 533, 631, 731) to generate the background (30, 40, 45, 47, 49, 50, 53, 54, 55, 60, 63, 70, 75, 80) of the electronic device (100) in the screen lock state when the one or more display data are unable to be obtained.

7. The method as claimed in any one of claims 1 to 6, wherein after the electronic device (100) enters the screen lock state, the method further comprises:
receiving an operation instruction to switch the one or more display data.

8. An electronic device (100), comprising:
a screen (110);
a memory (120);
one or more processing units (130); and
one or more programs (140), wherein the one or more programs (140) are stored in the memory (120) and configured to be executed by the one or more processing units (130), the one or more programs (140) including instructions:
to provide a selection of a background setting style;
to obtain one or more display data from a storage device according to the background setting style when the electronic device (100) enters a screen lock state;
to generate a background (30, 40, 45, 47, 49, 50, 53, 54, 55, 60, 63, 70, 75, 80) displayed on the screen (110) of the electronic device (100) in the screen lock state by using a template corresponding to the background setting style and the one or more display data; and
to change the one or more display data on the background (30, 40, 45, 47, 49, 50, 53, 54, 55, 60, 63, 70, 75, 80) as time changes.

9. The electronic device (100) as claimed in claim 8, wherein the one or more programs (140) further including instructions to provide a plurality of predetermined application programs, to receive a selection instruction to select one of the predetermined application programs, and to display a shortcut icon (322, 324, 326, 328) corresponding to the selected predetermined application program on the background (30, 40, 45, 47, 49, 50, 53, 54, 55, 60, 63, 70, 75, 80).

10. The electronic device (100) as claimed in any one of claims 8 to 9, wherein the storage device is a remote storage device or a local storage device built in or externally connected to the electronic device (100),
wherein when the storage device is the remote storage device, the one or more programs (140) further including instructions to connect the remote storage device corresponding to the background setting style through a network before obtaining the one or more display data from the storage device according to the background setting style, and to obtain the one or more display data from the remote storage device according to user identification information.

11. The electronic device (100) as claimed in any one of claims 8 to 10, wherein the instructions change a presenting manner of the one or more display data as time changes.

12. The electronic device (100) as claimed in any one of claims 8 to 11, wherein when the instructions access the storage device every a predetermined time so as to obtain latest display data according to the background setting style.

13. The electronic device (100) as claimed in any one of claims 8 to 12, wherein the one or more programs (140) further including instructions to use an error message (431, 433, 531, 532, 533, 631, 731) to generate the background (30, 40, 45, 47, 49, 50, 53, 54, 55, 60, 63, 70, 75, 80) of the electronic device (100) in the screen lock state when the one or more display data are unable to be obtained after the electronic device (100) enters the screen lock state.

14. The electronic device (100) as claimed in any one of claims 8 to 13, wherein the one or more programs (140) further including instructions to receive an operation instruction to switch the one or more display data after the electronic device (100) enters the screen lock state.

15. A computer program product for use in conjunction with an electronic device (100) comprising a screen (110), comprising a computer readable storage medium and an executable computer program mechanism embedded therein for performing the method for providing a background (30, 40, 45, 47, 49, 50, 53, 54, 55, 60, 63, 70, 75, 80) of a locked screen according to any one of claims 1 to 7.
